# EUROPEAN PATENT SPECIFICATION

(11) **EP 3 816 711 B1**
(45) Date of publication and mention of the grant of the patent: **19.06.2024**
(21) Application number: 20204715.5
(22) Date of filing: 29.10.2020
(51) Int. Cl.: G02C 5/22

(54) **ELASTIC HINGE FOR EYEGLASSES AND METHOD FOR DISASSEMBLING SAID HINGE**
ELASTISCHES SCHARNIER FÜR BRILLEN UND VERFAHREN ZUR DEMONTAGE DES SCHARNIERS
CHARNIÈRE ÉLASTIQUE POUR LUNETTES ET PROCÉDÉ POUR DÉMONTER LEDIT CHARNIÈRE

(30) Priority: 29.10.2019 IT 201900019918
(43) Date of publication of application: 05.05.2021
(73) Proprietor: Visottica Industrie S.p.A., 31058 Susegana (TV) (IT)
(72) Inventor: MONTALBAN, Rinaldo, 30100 Venezia (IT)
(74) Representative: Caldon, Giuliano

(56) References cited:
- WO-A1-01/31386
- WO-A2-2011/121554
- DE-C1- 10 216 514
- FR-A1- 2 907 920
- US-A1- 2004 020 010
- US-A1- 2019 271 857

## Description

### Field of application

The present invention regards an elastic hinge for eyeglasses and an articulation assembly for eyeglasses according to claims 1 and 9, respectively.

The present hinge is advantageously intended to be employed in the production of eyeglasses and in particular the method for the assembly thereof is susceptible of being used during the production process of eyeglasses during which the temples are mechanically connected to the end piece.

Therefore, the hinge and the method for the disassembly thereof are inserted in the industrial field of eyewear or rather of the production of eyeglasses and of accessories and components for eyeglasses.

### State of the art

As is known, in the eyewear field, hinges are employed for articulating the temples to the front of a frame.

For such purpose, each hinge is conventionally formed by two articulation elements, pivoted to each other, of which, respectively, a first element is fixed to a temple and a second element is fixed to a lateral portion of the front of the frame (also known in the technical jargon of the field with the term "end piece").

In operation, hinges allow the temples to rotate between a closed position, in which they are collected on the front of the eyeglasses, and an open position, in which they assume a position that is substantially right-angle with respect to the front, adapted to allow the use thereof on the face of the user.

In particular, elastic hinges for eyeglasses are known, of the type in which the first articulation element comprises a box-like body delimiting a seat provided with an opening directed towards the second articulation element, and a carriage slidably housed within the seat of the aforesaid box-like body. More in detail, the carriage is provided with a head partially projecting from the opening of the seat of the box-like body and with a rod-like element fixed on the rear part to the head and provided, at the opposite end with respect to the head, with a widened terminal element. The first articulation element also comprises a helical spring, which is wound around the rod-like element and is provided with a first end which is in abutment against the widened terminal element and with a second end which is anchored to the box-like body by means of retention means.

The latter for example comprise a bushing slidably mounted around the rod-like element and on which a screw is engaged which is transversely inserted in a threaded hole made on the box-like body, coming to stop the bushing. As an alternative to the screw, it is possible to make a crimping point which, by locally deforming a portion of the box-like body, makes a protuberance which is engaged on the bushing.

The elastic hinges of known type described above and the consequent method for the assembly thereof have demonstrated that they do not lack drawbacks.

A first drawback lies in the fact that once the hinge and in particular the first articulation element are assembled with the carriage housed in the box-like body, it is difficult to disassemble, for example for the maintenance thereof. This is mainly due to the fact that the retention means are generally conceived, in particular when constituted by a crimping, in order to definitively fix the carriage within the box-like body.

In addition, the steps of the disassembling method in any case involve an operation of crimping and screwing that is not easy, as they require an automation with a careful quality control in order to monitor the conducted operation.

A further drawback lies in the fact that in case of breakage of the hinge, the carriage is not extractable and it is necessary to substitute the entire rod of the eyeglass frame to which the damaged hinge is fixed, increasing the maintenance costs.

For the purpose of making an elastic hinge disassemblable, an elastic hinge solution is known, in particular described in the document US 7735193, in which the first end of the helical spring is placed in abutment against a threaded grub screw provided at the widened terminal element of the carriage. The threaded grub screw engages the seat via screwing and can be actuated externally by means of a tool, in particular a screwdriver.

Also the elastic hinge of known type described herein has in practice shown that it does not lack drawbacks.

The main drawback lies in the fact that the threaded grub screw is at least partially visible externally, negatively affecting the appearance of the hinge and therefore of the frame.

In order to at least partially overcome the abovementioned drawback of the hinge of known type, an elastic hinge for eyeglasses is known, in particular described in the patent US 5760869, in which the temple of the frame provides for an elastic carriage outside the hinge and associated with the temple.

Such carriage is on one side fixed to one of the hinge bodies and on the other side to the temple and comprises a helical spring interposed between a shoulder of the carriage itself and the temple and is susceptible of being compressed during the movement of the temple.

The carriage is retained in position by an elastically pliable element which on one side engages the carriage and on the other side a shaped bottom wall, which is provided with a through hole that places the external environment in communication with the elastically pliable element.

In order to disassemble the carriage from the temple, e.g. for a maintenance, the operator inserts a tip of a tool within the through hole, compressing the elastically pliable element in order to disengage it from the shaped bottom wall, allowing the extraction of the carriage together with the elastically pliable element itself.

Also the latter elastic hinge of known type has in practice shown that it does not lack drawbacks.

The main drawback lies in the fact that the hinge and the carriage are quite bulky, negatively affecting the final appearance of the eyeglass frame.

A further drawback lies in the fact that the assembly of the hinge and of the carriage with the helical spring and the elastically pliable element is quite complex and difficult to actuate, increasing the time and costs of assembly of the hinge on the frame.

In order to at least partially overcome the aforesaid drawbacks, an elastic hinge is known, in particular described in the document DE 10216514, in which the box-like body of the first hinge element has a lateral wall with a weakening intended to be broken by a punch in order to move a movable lock element.

More in detail, the carriage slidably inserted within the seat made in the box-like body is provided with the aforesaid lock element which engages the seat itself, locking the carriage with respect to the box-like body.

In operation, the punch, by breaking the wall of the box-like body, pushes the lock element from a lock configuration to a release configuration, allowing the operator to extract the carriage from the box-like body.

Nevertheless, also the latter flexible hinge has in practice shown that it does not lack drawbacks.

The main drawback lies in the fact that in order to disassemble the hinge, it is necessary to break the box-like body, in the end negatively affecting the usability of the hinge.

In this situation, it is necessary to substitute the box-like body of the first articulation element each time that any one maintenance of the hinge is necessary.

A further drawback lies in the fact that the need to have to break the box-like body leads to a high jamming probability, in which several pieces of the lateral wall of the box-like body are inserted between the seat and the carriage, blocking the latter.

A further drawback lies in the fact that the operator, during the breakage of the box-like body of the first hinge element, risks deforming the temple of the frame, due to the pressure to be exerted for the aforesaid breakage.

### Presentation of the invention

In this situation, the problem underlying the present invention is that of eliminating the drawbacks of the abovementioned prior art, by providing an elastic hinge for eyeglasses and a method for disassembling the aforesaid elastic hinge which allows quickly and easily disassembling the components of the elements of the elastic hinge for an easy substitution or maintenance thereof.

A further object of the present invention is to provide an elastic hinge comprising a carriage and a box-like body as well as retention means which ensure retention stability of the aforesaid carriage in the box-like body.

A further object of the present invention is to provide an elastic hinge in which the aforesaid retention means allow removably connecting the carriage to the box-like body.

A further object of the present invention is to provide an elastic hinge for the eyeglass frame in which the retention means do not negatively affect the aesthetics of the hinge.

A further object of the present invention is to provide an elastic hinge for the eyeglass frame which is compact and associable with any type of eyeglass frame.

A further object of the present invention is to provide a method for disassembling the aforesaid elastic hinge which is simple, quick and inexpensive to make.

### Brief description of the drawings

The technical characteristics of the finding, according to the aforesaid objects, can be clearly seen in the contents of the below-reported claims and the advantages thereof will be more evident from the following detailed description, made with reference to the enclosed drawings, which represent several merely exemplifying and non-limiting embodiments of the invention, in which:
- figure 1 shows a perspective view of an elastic hinge for eyeglass frames according to an example not covered by the invention;
- figure 2 shows a perspective view of a first articulation element of the elastic hinge in accordance with the aforesaid example, mounted on a metallic core intended to be incorporated within a temple;
- figure 3 shows a perspective view of a detail of figure 2, regarding the first articulation element of the elastic hinge, in this example;
- figure 4 shows a perspective view of the first articulation element of the present elastic hinge in accordance with the previous example;
- figure 5 shows a perspective and partially exploded view of the first articulation element of the elastic hinge in accordance with the previous example;
- figure 6 shows a sectional view of the first articulation element of figure 4 according to the trace VI-VI of figure 4;
- figure 7 shows a perspective view of the first articulation element of the elastic hinge of the previous example, with two pins of a tool engaged within two corresponding through openings;
- figure 8 shows a sectional view of the first articulation element illustrated in figure 7, attained along the trace VIII-VIII of figure 7;
- figure 9 shows a perspective view of the first articulation element of the elastic hinge, object of the present invention, in a first embodiment thereof;
- figure 10 illustrates a sectional view of the first articulation element of figure 9 attained along the trace X-X of figure 9;
- figure 11 shows a perspective view of the first articulation element of the elastic hinge according to an example not covered by the invention, in which a box-like body is directly obtained in the temple of a frame;
- figure 12 shows a perspective view of a detail of the first articulation element illustrated in figure 11;
- figure 13 shows a perspective view of the first articulation element of the elastic hinge according an example not covered by the invention, in which a box-like body is fixed at one end of the core;
- figure 14 shows a perspective view of a detail of the first articulation element illustrated in figure 13;
- figure 15 shows a perspective view of a temple with the first element of the present elastic hinge according to a second embodiment, in which the box-like body is directly made in the temple;
- figures 16 and 17 show two different perspective views of the first articulation element illustrated in figure 15;
- figure 18 shows an internal front view of the first articulation element illustrated in figure 16;
- figure 19 shows a sectional view of the first articulation element illustrated in figure 18, according to the trace XIX - XIX of figure 18 itself;
- fig. 20 shows a perspective view of a temple with the first articulation element of the present elastic hinge according to a third embodiment, in which the box-like body is fixed to the metallic temple;
- figures 21 and 22 show two different perspective views of the first articulation element illustrated in figure 20;
- figure 23 shows an internal front view of the first articulation element illustrated in figure 21;
- figure 24 shows a sectional view of the first articulation element illustrated in figure 23, according to the trace XXIV - XXIV of figure 23 itself;
- figure 25 shows a perspective view of a temple with the first articulation element of the elastic hinge according to a fourth embodiment, in which the box-like body is fixed to a core of the temple;
- figure 26 shows a perspective view of the first articulation element illustrated in figure 25;
- fig. 27 shows an internal front view of the first articulation element illustrated in figure 26;
- fig. 28 shows a sectional view of the first articulation element illustrated in figure 27, according to the trace XXVIII - XXVIII of figure 27 itself;
- figure 29 shows a detail of the carriage of the first articulation element illustrated in figure 16;
- figure 30 shows a side view of the carriage of figure 29 with some parts transparent in order to better illustrate other parts.

### Detailed description of a preferred embodiment

With reference to the enclosed drawings, reference number 1 overall indicates the elastic hinge for the eyeglass frame, object of the present invention.

The elastic hinge 1, according to the present invention, is intended for making frames for eyeglasses of any type and hence both of conventional eyeglass type and of sports type and is adapted to mutually articulate, in a per se entirely known and conventional manner, two parts of the eyeglass frame.

More in detail, the frame is usually formed, in a per se conventional manner, by a front which supports a pair of lenses by means of two annular portions (or "rims") connected in the central part by a bridge, and by a pair of temples 2 pivoted by means of elastic hinges 1 to the sides of the front and, more precisely, to two lateral portions thereof directed towards the rear part of the eyeglasses and known in the technical jargon in the field with the term end piece 3.

In particular, the hinge 1 is of elasticized type, i.e. adapted to allow an extra-opening travel of the temples 2 with elastic return aimed to allow easily putting on the eyeglasses and aimed to ensure an improved fitting of the same once placed on the head of the user.

In operation, the temples 2 can be moved, due to the aforesaid elastic hinges 1, in a per se entirely conventional manner, between a closed position, in which they are collected on the front of the eyeglasses, an open position, in which they take a position substantially at right angle with respect to the front of the eyeglasses, and an extra-open position, in which they are forced beyond the aforesaid open position.

Advantageously, the present invention refers to a hinge 1 of elastic type provided with the aforesaid extra-open function for easy wearing.

The present elastic hinge 1 comprises, in a per se entirely conventional manner, two articulation elements, of which a first articulation element 4 is mechanically associable with a first eyeglass component, which advantageously in accordance with the example reported in the enclosed figures is constituted by a temple 2 of the frame, and a second articulation element 5 is mechanically associable with a second eyeglass component, which advantageously in accordance with the example of the enclosed figures is constituted by the end piece 3 of the front of the frame.

Hereinbelow, reference will be made to the preferred solution of the enclosed figures, in which the first component of the frame is in fact constituted by a temple 2 and the second component is constituted by the end piece 3 of the frame, it being possible in any case to provide for embodiments where the two components are reversed without departing from the protective scope of the present finding.

In particular the first component for the eyeglass frame, the temple 2, defines a longitudinal extension direction indicated with the axis Y in the enclosed figures.

Advantageously, the temple 2 can be made of metallic material (e.g. steel), or of plastic/polymer material (e.g. cellulose acetate). In accordance with a particular embodiment, the temple 2 comprises a core 20 (in particular made of metal) inserted within a covering 21 (in particular of plastic/polymer material) and fixed to the latter by means of attachment means 23, preferably of removable type, such as screw means.

Preferably, the temple 2 comprises an internal face, which is directed towards the internal face of the other temple 2 when these are in open position, and an external face placed on the opposite side of the internal face with respect to the longitudinal direction Y.

In accordance with the embodiments illustrated in the enclosed figures the first articulation element 4 constitutes the male element of the hinge, while the second articulation element 5 constitutes the female element of the hinge. At any rate nothing prohibits making a hinge 1 in accordance with the invention in which it is the first articulation element 4 to be a female element and the second articulation element 5 to be a male element.

Hereinbelow, for description clarity, reference will be made to the embodiment in which: the first articulation element 4 constitutes the male element of the elastic hinge 1 and is mechanically associated with the temple 2 of the frame, and the second articulation element 5 constitutes the female element of the elastic hinge 1 and is mechanically associated with the end piece 3 of the frame.

Advantageously the first articulation element 4 is therefore extended along the aforesaid longitudinal extension direction Y parallel to the longitudinal extension direction of the temple 2.

The first articulation element 4 and the second articulation element 5 are rotatably coupled, for example in an entirely conventional manner by means of a hinge pin 6. Such hinge pin 6 is extended along a rotation axis X substantially perpendicular with respect to the longitudinal extension direction of the first articulation element 4 indicated with Y.

The second articulation element 5 is for example obtained in a manner per se conventional, with a shaped metallic body provided with at least two parallel shoulders 5' which are projecting extended from a common base fixed to the end piece of the frame. Otherwise the shoulders 5' could be attained in a single body in a single body in the plastic of the same end piece 3. The shoulders 5' are provided, in accordance with an embodiment reported hereinbelow, with corresponding aligned and facing holes for the insertion of a hinge pin 6.

The hinge comprises at least one aforesaid hinge pin 6, which rotatably connects the first articulation element 4 to the second articulation element 5 around a rotation axis X.

In accordance with the embodiments illustrated in the enclosed figures, the first articulation element 4 comprises a box-like body 7, which is provided with an internal surface, which delimits a seat 8 provided with an opening 8' directed towards the second articulation element 5, and with an external surface.

The first articulation element 4 also comprises a carriage 9, which is slidably inserted within the seat 8 of the box-like body 7, in particular such to be able to slide according to a slide direction parallel to the longitudinal direction Y.

Advantageously, the seat 8 of the box-like body 7 defines, along the longitudinal direction Y, a guide with which the carriage 9 is slidably engaged in order to slide along the longitudinal direction Y itself.

In particular, the internal surface of the box-like body 7 is extended around the longitudinal direction Y, extended in this manner also around the part of the carriage 9 inserted in the seat 8, defining the guide for the carriage 9 itself.

The carriage 9 is provided with a head 10 at least partially projecting from the opening 8' of the seat 8 of the box-like body 6 and with an elongated element 11 which is mainly extended along the aforesaid longitudinal direction Y between a first end, to which the head 10 is fixed, and an opposite second end, which carries, fixed thereto, a terminal element 12. Advantageously, such terminal element 12 is extended, at least with one component, transversely to the longitudinal direction Y, in particular projecting with respect to the elongated element 11 according to an extension direction that is tilted (and preferably substantially orthogonal) with respect to longitudinal direction Y.

The carriage 9 also comprises a spring 13, which is placed within the seat 8 of the box-like body 7 and thrustingly acts on the terminal element 12 of the carriage 9 in order to push the head 10 towards the interior of the seat 8 itself.

Advantageously, in accordance with the preferred embodiments illustrated in the enclosed figures, the spring 13 is provided with a first end in abutment against the terminal element 12 and with an opposite second end.

The spring 13 advantageously has helical form, in particular with axis parallel to the longitudinal direction Y.

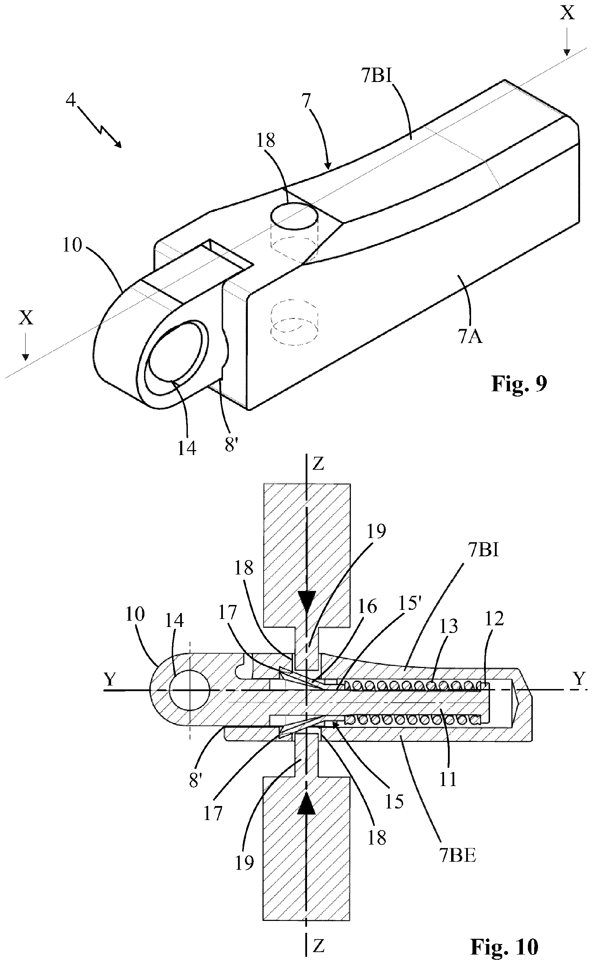

In accordance with the embodiments illustrated in figures 9 and 10, the elongated element 11 of the carriage 9 is rod-like and carries, fixed to its second end, the terminal element 12 which is widened with respect to the rod-like elongated element 11.

Preferably, in accordance with such embodiments, the spring 13 is coaxially mounted around the rod-like elongated element 11 of the carriage 9.

For such purpose, the spring 13 defines a central hole with transverse size greater than that of the rod-like elongated element 11 and smaller than that of the widened terminal element 12 of the elongated element 11.

Due to such size characteristic, the spring 13 is placed in abutment against the widened terminal element 12 of the elongated element 11 of the carriage 9.

The widened terminal element 12 can for example be obtained by means of screwing a screw in the rod-like elongated element 11 in a manner such that the head of such screw constitutes the terminal element 12, i.e. it can be obtained by means of deformation, for example by riveting the end of the elongated element 11.

In general, according to the invention, the action of the spring 13 is aimed to retain, by means of an elastic expansion force, the carriage 9 within the seat 8 made in the box-like body 7.

Advantageously, the seat 8 of the box-like body 7 is extended along the longitudinal direction Y of the extension of the box-like body 7 itself.

The abovementioned carriage 9 constitutes the movable part of the first articulation element 4, being susceptible of sliding in a guided manner within the seat 8 of the box-like body 7 along the longitudinal direction Y in relation to the rotation movement of the temple 2 with respect to the end piece 3 of the eyeglasses.

In accordance with the preferred embodiments illustrated in the enclosed figures, the elongated element 11 is completely contained within the seat 8 of the box-like body 7.

In order to rotatably connect the temple 2 to the end piece 3, the head 10 is advantageously mechanically associated with the second articulation element 5, and in accordance with the preferred embodiments it is provided with a plate-like shape with at least one through eyelet 14 made transversely, coaxial with the holes provided in the shoulders 5' of the second articulation element 5 in order to allow the passage of the hinge pin 6.

In particular, the embodiments illustrated in figures 9 and 10 refer to elastic hinges with three shoulders, in which the second articulation element 5 (female) is provided with two shoulders 5' and the head 10 of the carriage 9 of the first articulation element 4 (male) defines only one head shoulder inserted between the two shoulders 5'.

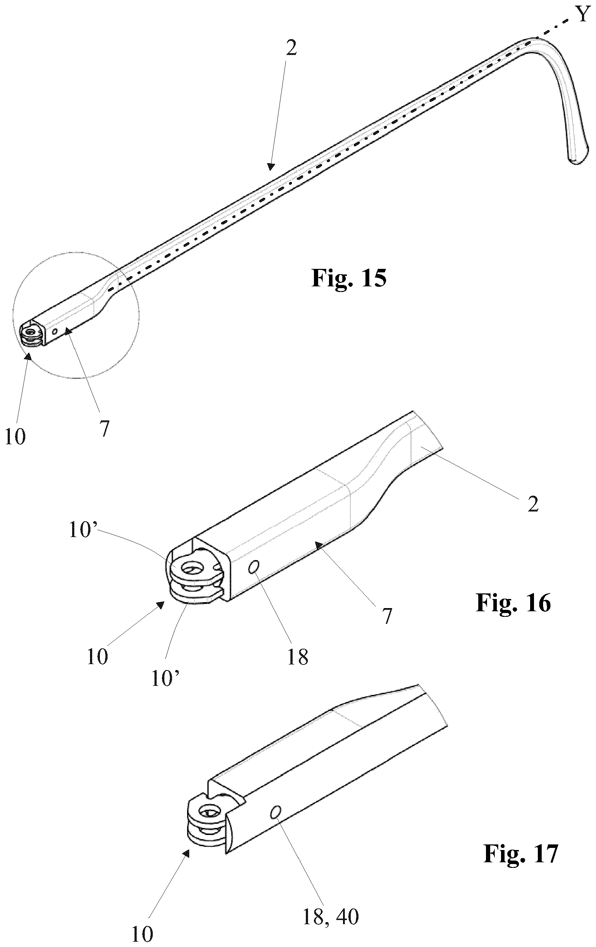

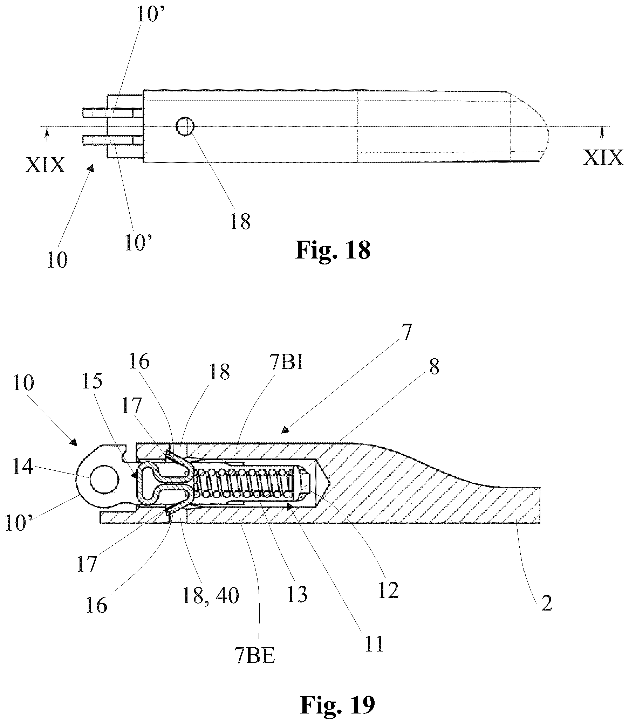

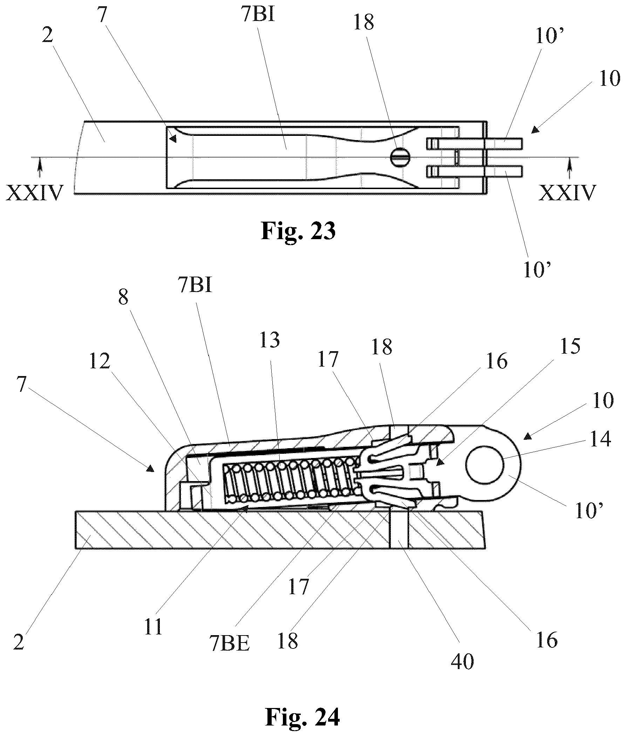

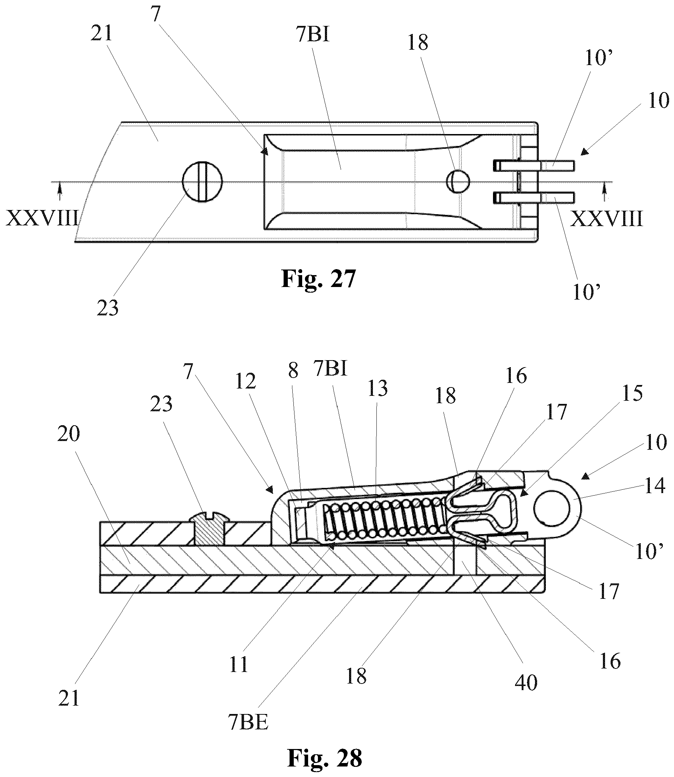

The embodiments illustrated in figures 15-30 refer to elastic hinges with five shoulders, in which the second articulation element 5 (female) is provided with three shoulders 5' and the head 10 of the carriage 9 of the first articulation element 4 (male) comprises two head shoulders 10' each inserted between a pair of the shoulders 5' (in a per se known manner).

Otherwise, in accordance with a further embodiment not illustrated in the enclosed figures, the head 10 of the first articulation element 4 can be made of spherical shape, acting as a hinge pin and being housed in a counter-shaped niche made in the second articulation element 5, for example made in the central part of the two parallel shoulders 5'. The engagement of the spherical head 10 in the niche defines an articulation between the first and the second component 2 and 3 of the eyeglass frame.

In a per se known manner, different modes can be provided for fixing the first articulation element 4 to the temple 2 of the eyeglass frame.

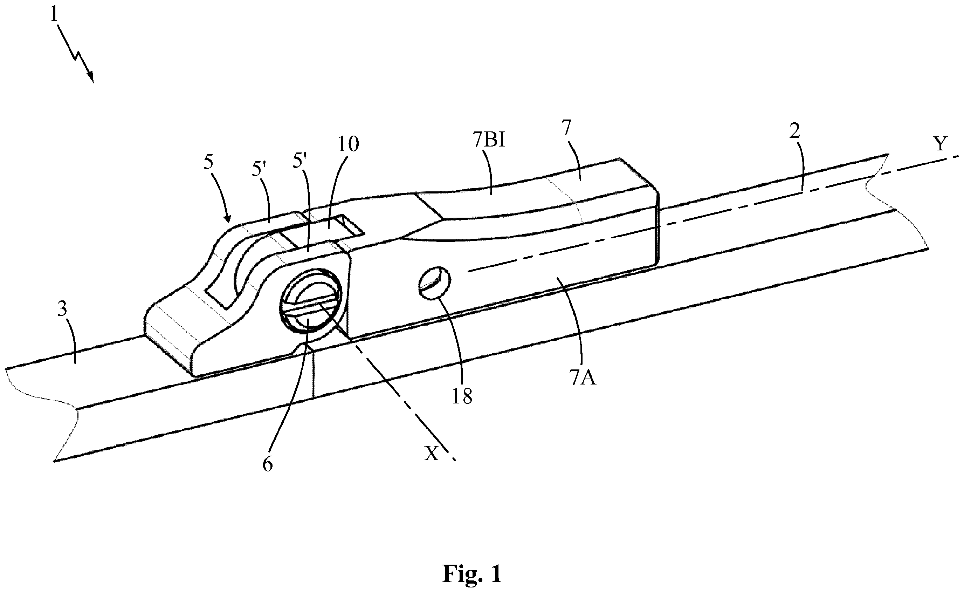

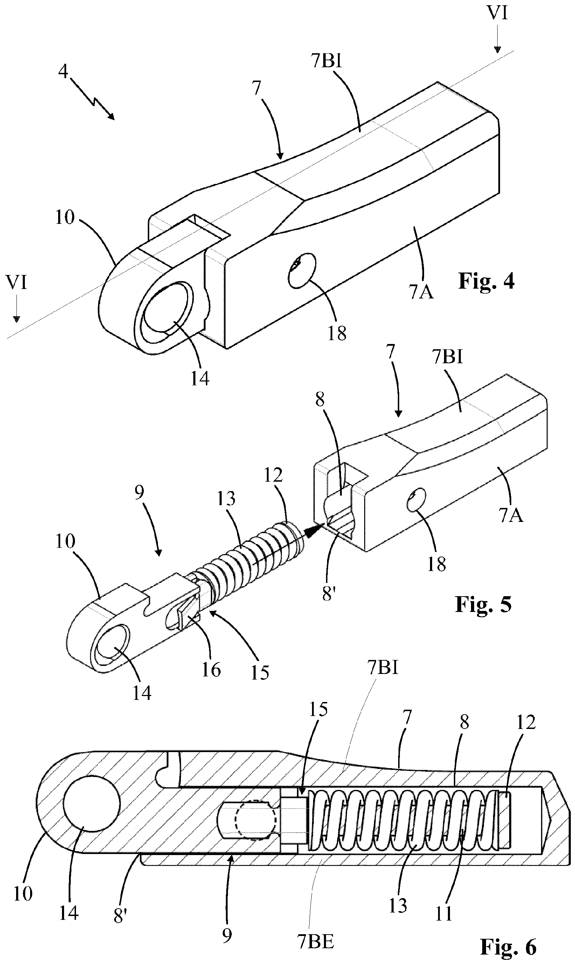

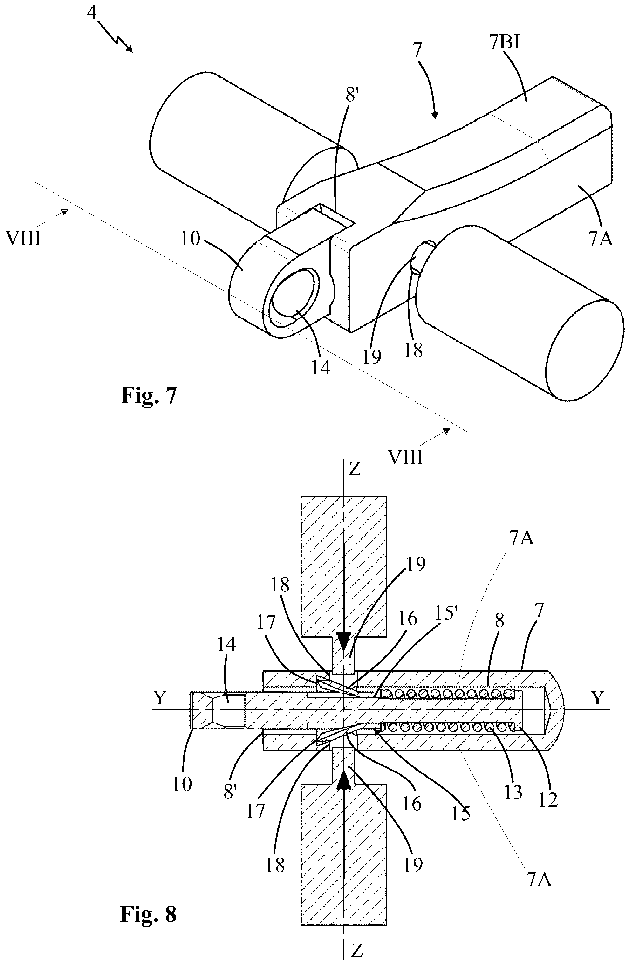

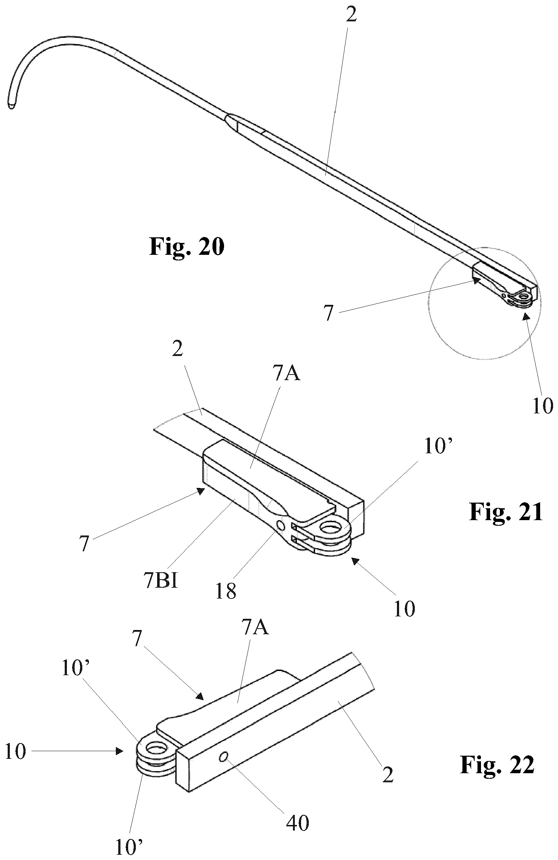

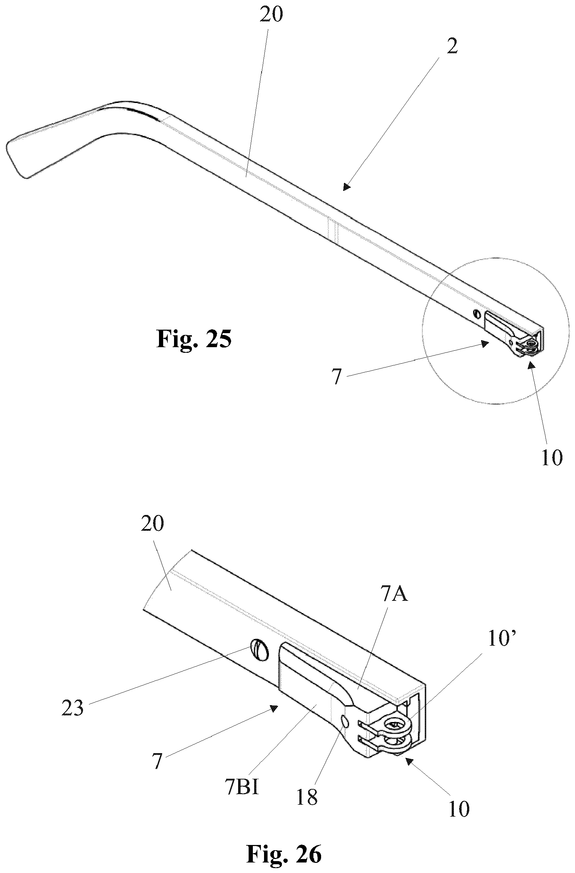

In accordance with an example not covered by the invention illustrated in figures 1-8, with the first embodiment illustrated in figures 9-10, with the third embodiment illustrated in figures 20-24 and with the fourth embodiment illustrated in figures 25-28, the box-like body 7 is fixed to the internal face of the temple 2 at the articulation end thereof.

The box-like body 7 of the first articulation element 4 is mechanically fixed to the temple 2 through entirely conventional fixing means, e.g. screws, welding or retention anchors embedded in the material, e.g. plastic, of the temple 2.

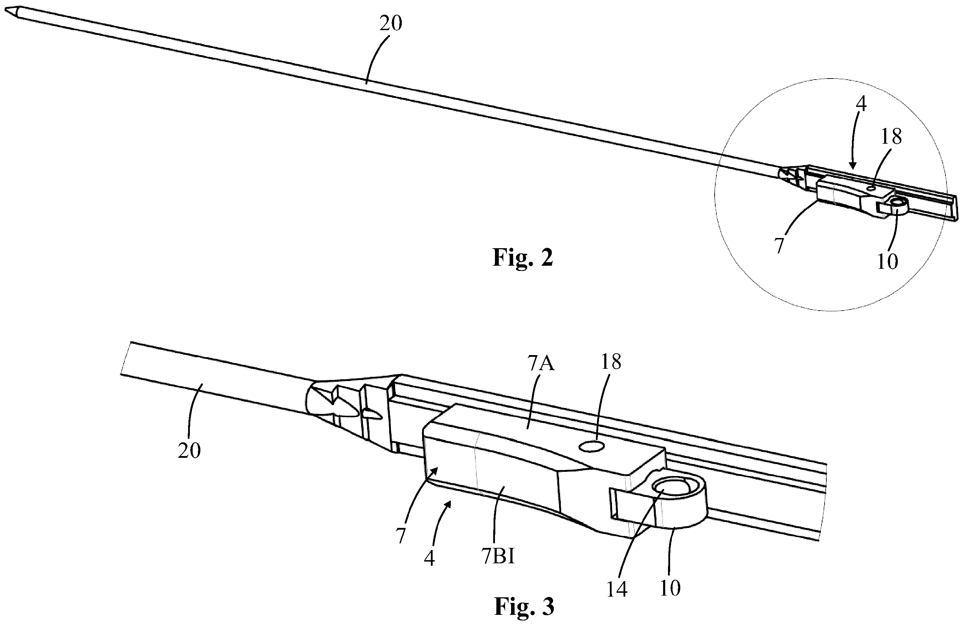

For example, the fixing means can provide for, as illustrated in figures 2 and 3, a welding at the metallic core 20 intended to be embedded within the temple 2, normally made of plastic/polymer material such as cellulose acetate.

Otherwise, the fixing means of the box-like body 7 can comprise a threaded hole in which a screw is susceptible of being engaged for the fixing to the temple 2.

In particular, in the third embodiment of figures 20-24, the box-like body 7 is fixed, e.g. via welding, to the internal face of the temple 2, preferably made of metallic material.

Suitably, in the fourth embodiment of figures 25-28, the box-like body 7 is fixed, e.g. via welding, to the core 20 of the temple 2 (at the internal face of the latter). Preferably, the temple 2 is fixed, in particular by means of mechanical fixing (e.g. through screw means) to the covering 21 of the temple 2.

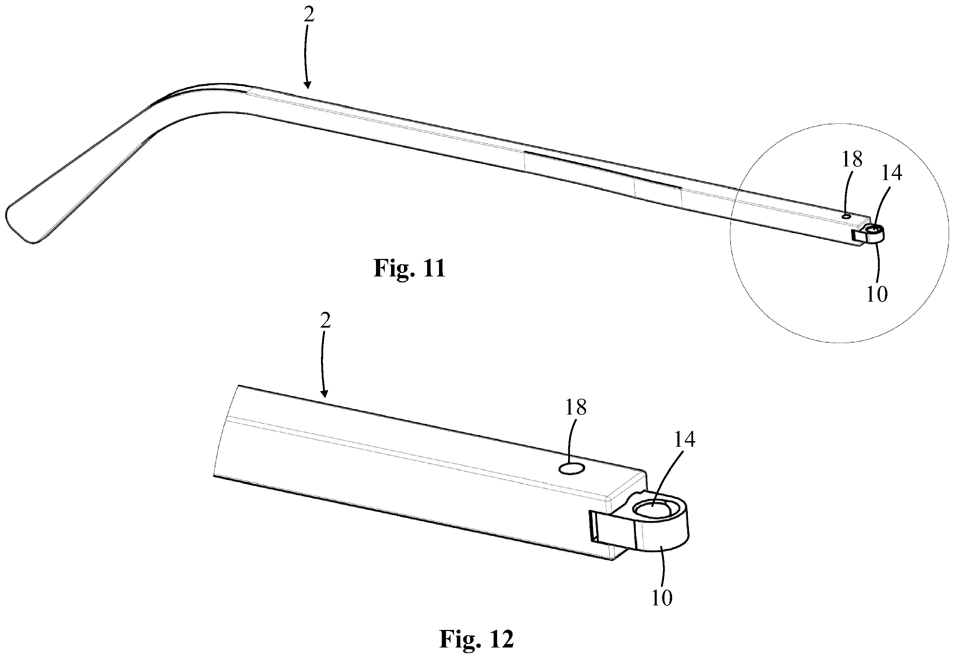

Otherwise, in accordance with an example not covered by the invention illustrated in the enclosed figures 11 and 12 and with the second embodiment illustrated in figures 15-19, the box-like body 7 is embedded or directly made within the temple 2 and is provided with an opening at the front face of the temple 2 itself which defines the opening 8' of the box-like body 7 itself.

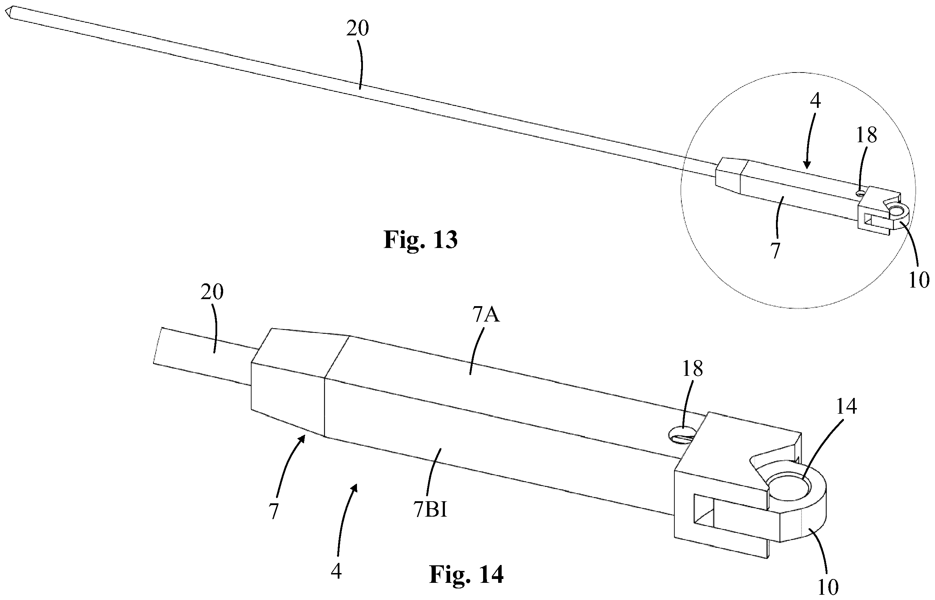

Otherwise, in accordance with an example not covered by the invention illustrated in the enclosed figures 13 and 14, the box-like body 7 is mechanically fixed at one end of the metallic core 20 of the temple 2.

In accordance with the embodiments illustrated in figures 9 and 10, the mechanical fixing of the rod-like elongated element 11 on the rear part of the head 10 can be obtained by engaging an initial section of the rod-like elongated element 11, opposite the widened terminal element 12, in a blind hole made on the rear face of the head 10 of the carriage 9.

Advantageously, the aforesaid initial section of the rod-like elongated element 11 is forced in the blind hole made on the rear face of the head 10 such that it is engaged via friction following plastic deformation.

Otherwise, the initial section of the rod-like elongated element 11 can be mechanically fixed in the blind hole made in the head 10 by means of screwing, thus avoiding the plastic deformation operation of crimping.

Otherwise, the head portion 10 and the rod-like elongated element 11 of the carriage 9 can be made in a single body, e.g. via molding.

Preferably the head 10, the elongated element 11 and the terminal element 12 of the carriage 9 are made of metallic material, e.g. steel.

The first articulation element 4 of the hinge 1 according to the invention also comprises at least one retention element 15, which is locked in the seat 8 of the box-like body 7 and is positioned between the head 10 and the spring 13.

Suitably, in this manner, the spring 13 is placed between the terminal element 12 and the retention element 15.

Preferably, the second end of the spring 13 is in abutment against the aforesaid retention element 15.

The retention element 15 according to the invention is provided with at least two lock appendages 16, elastically pliable, which are placed in positions that are substantially opposite with respect to the longitudinal direction Y. Such lock appendages 16 are projecting, at least radially with respect to the longitudinal direction Y, from the elongated element 11, and are engaged with the internal surface of the box-like body 7.

In particular, by radial extension of the lock appendages 16 it is intended that such extension has at least one component orthogonal with respect to the longitudinal direction, in particular the lock appendages 16 able to be tilted with respect to the longitudinal direction Y by an angle smaller than 90°, e.g. directed towards the head 10 of the carriage, for example as in the embodiments illustrated in the enclosed figures.

Preferably, the retention element 15 is made of metallic material, and the lock appendages 16 are preferably obtained by means of bending, rendering them elastically pliable.

In accordance with the embodiments illustrated in figures 9 and 10, the retention element 15 is provided with a through hole 15' in which the rod-like elongated element 11 of the carriage 9 is slidably inserted.

According to the idea underlying the present invention, the box-like body 7 is provided with at least two through openings 18, which are placed on opposite sides of the box-like body 7 with respect to the longitudinal direction Y, are extended in a through manner between the external surface and the internal surface of the box-like body 7 itself, and are communicating with the seat 8, the corresponding lock appendage 16 of the retention element 15 at least partially facing each of such through openings 18.

In accordance with one embodiment not illustrated in the enclosed figures, the lock appendages 16 of the retention element 15 engage the two aforesaid through openings 18.

The through openings 18 can have substantially circular extension, in accordance with the embodiments illustrated in the enclosed figures, or otherwise they can have elongated extension, defining a slot.

The internal surface of the box-like body 7 is provided with at least two undercut recesses 17, each of which engaging the corresponding lock appendage 16 of the retention element 15.

More in detail, the undercut recesses 17 of the box-like body 7 are advantageously made in a depression on the internal surface.

Advantageously, the two lock appendages 16 comprise two elastic tabs which are extended tilted (in particular directed towards the head 10) and terminate within the undercut recesses 17 of the box-like body 7.

In accordance with the embodiments illustrated in figures 9 and 10, the retention element 15 comprises a collar wound around the elongated element 11, which receives in abutment the second end of the spring 13 and internally defines the through hole 15' traversed by the elongated element 11 itself.

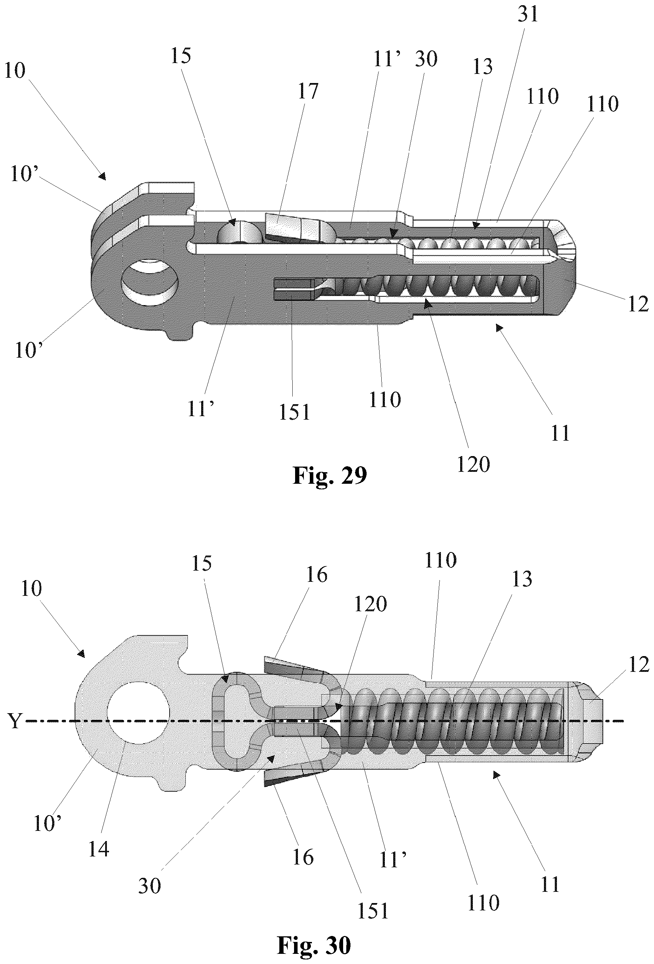

Advantageously, in accordance with the embodiments illustrated in figures 15-30 (in particular with reference to figures 29-30), the elongated element 11 of the carriage 9 comprises two elongated bodies 11' placed side-by-side and spaced from each other (according to a direction transverse to the longitudinal direction Y).

The two elongated bodies 11' are connected to each other by the terminal element 12, at the second end of the elongated element 11.

The spring 13 and the retention element 15 are placed between the two elongated bodies 11', in a manner such that, in particular, the spring 13 is compressed between the retention element 15 and the terminal element 12.

Preferably, the head 10 of the carriage 9 comprises two head shoulders 10' (separated from each other), each of which being fixed to the corresponding elongated body 11', in particular in a single body with the latter, at the first end of the elongated element 11.

In particular, the two head shoulders 10' of the head 10 are provided with corresponding through eyelets 14 aligned with the eyelets of the three shoulders 5' of the second articulation element 5, in a hinge configuration with five shoulders (as previously discussed).

Advantageously, the elongated element 11 has substantially U-shaped form, with the base defined by the terminal element 12 and the arms defined by the two elongated bodies 11' (preferably with the corresponding head shoulders 10').

For example, the elongated element 11 is obtained by means of a metallic plate that is suitably bent and cut.

Preferably, each of the two elongated bodies 11' (suitably with plate-like shape) is provided with two longitudinal edges 110, which in substance define the width of the elongated body 11' itself.

Preferably, the two elongated bodies 11' are placed parallel to each other, delimiting an internal seat 30 therebetween in which the spring 13 and the retention element 15 are placed.

Advantageously, the aforesaid internal seat 30 is provided with open longitudinal flanks 31, which are placed in opposite position with respect to the longitudinal axis Y and are traversed by the corresponding lock appendages 16 of the retention element 15. In particular, each open longitudinal flank 31 is delimited by the corresponding adjacent longitudinal edges 110 of the two elongated bodies 11'.

Preferably, the two elongated bodies 11' are each provided with corresponding engagement windows 120 in which corresponding projecting portions 151 of the retention element 15 are inserted which are adapted to maintain the latter and the spring 13 constrained to the elongated element 11 before the installation of the carriage 9 in the seat 8 of the box-like body 7. More in detail, before the carriage 9 is inserted in the seat 8, the spring 13, compressed between the terminal element 12 and the retention element 15, pushes the latter towards the head 10, forcing the projecting portions 151 to be connected on the end edges of the respective engagement windows 120, in this manner maintaining the retention element 15 and the spring 13 constrained to the elongated element 11. In particular, the projecting portions 151 are positioned offset substantially by 90° around the longitudinal axis Y with respect to the lock appendages 16 of the retention element 15.

Advantageously, according to the invention, the through openings 18 are configured for being traversed by two corresponding pins 19 in order to move the lock appendages 16 from a lock configuration, in which they engage the undercut recesses 17, to a release configuration, in which the lock appendages 16 are substantially adhered to the elongated element 11 in order to release the carriage 9 with respect to the box-like body 7.

For such purpose, each of the through openings 18 is advantageously in communication with the corresponding undercut recess 17, which preferably at least partially houses the corresponding lock appendage 16.

In accordance with the embodiments illustrated in the enclosed figures, the undercut recesses 17 are extended starting from the internal surface of the box-like body 7 with increasing depth.

More in detail, the undercut recesses 17 remain defined by a bottom wall which is extended starting from the corresponding through opening 18 with depth increasing progressively as one moves away from the through opening 18 itself.

Advantageously, the through openings 18 are made at the undercut recesses 17 in order to place the lock appendages 16 in communication with an external environment.

In this manner, the pins 19 placed to traverse the through openings 18 reach in abutment against the lock appendages 16 in order to move them into the release configuration.

In order to allow an easier disassembly of the hinge 1, object of the present invention, the through openings 18 are substantially aligned along a transverse axis Z substantially orthogonal to the longitudinal direction Y.

Advantageously, an operator can for example use a gripper provided with the two pins 19 spaced from each other and aligned in order to insert each of them within a corresponding through opening 18, in order to move the corresponding lock appendage 16 of the retention element 15.

The box-like body 7 comprises two lateral walls 7A placed on opposite sides with respect to the longitudinal direction Y and substantially orthogonal to the rotation axis X.

The box-like body 7 comprises two front walls 7BI, 7BE placed on opposite sides with respect to the longitudinal direction Y and substantially parallel to the rotation axis X. In particular, such front walls 7BI, 7BE comprise an internal front wall 7BI, which is placed on the side towards which the elastic hinge 1 is closed, and an external front wall 7BE placed on the opposite side with respect to the longitudinal direction Y.

In accordance with an example not covered by the invention illustrated in figures 1-8, and in figures 11-14, the corresponding through opening 18 is made on each of the aforesaid lateral walls 7A.

According to the invention, in accordance with the first embodiment of the hinge 1, illustrated in figures 9-10, and with the second, third and fourth embodiment illustrated in figures 15-28, the corresponding through opening 18 is made on each of the aforesaid front walls 7BI, 7BE. In particular, in accordance with the latter embodiments, at least one temple portion 2 placed at the external front wall 7BE is provided with a through access hole 40 aligned with the through opening 18 made on such external front wall 7BE, so as to allow the passage of the pin 19 in order to execute the disassembly of the elastic hinge 1, as discussed in detail hereinbelow.

Also forming the object of the present invention is an articulation assembly for eyeglasses, which comprises an elastic hinge 1 of the above-described type (regarding which the reference numbers will be maintained) and a temple 2 which is integral with the external front wall 7BE of the box-like body 7 of the first articulation element 4 of the elastic hinge 1 itself.

The temple 2 comprises at least one portion associated with the external front wall 7BE and provided with a through access hole 40, which is aligned with the through opening 18 made on said external front wall 7BE and it is in communication with such through opening 18 made on the external front wall 7BE. In particular, the access hole 40 is aligned with the through opening 18 of the external front wall 7BE along a direction orthogonal to the longitudinal direction Y, e.g. the aforesaid transverse axis Z.

Advantageously, the portion of the temple 2 associated with the external front wall 7BE can be fixed to the latter (e.g. by means of welding, mechanical fixing, in particular with screw, etc.), or it can entirely or partly form the external front wall 7BE itself. Such associated portion can also be a single component of the temple 2 (e.g. the core 20).

With reference for example to the second embodiment illustrated in figures 15-19, the external front wall 7BE (and in particular the entire box-like body 7) is formed by a corresponding portion of the temple 2 (in particular made of polymer material). In particular, the external front wall 7BE is formed by a temple portion 2 which is extended on the external face of the latter at the articulation end of the temple 2 itself. The aforesaid access hole 40 in this case is made on the temple portion 2 that forms the external front wall 7BE and, in particular, coincides with the through opening 18 of the latter.

With reference to the third embodiment illustrated in figures 20-24, the external front wall 7BE of the box-like body 7 is fixed (in particular by means of welding) to the internal face of the temple 2 (in particular made of metal). The aforesaid access hole 40 in this case is made in the entire thickness of the portion of the temple 2 associated with the external front wall 7BE and is placed in front of the through opening 18 of the external front wall 7BE.

With reference to the fourth embodiment illustrated in figures 25-28, the external front wall 7BE of the box-like body 7 is fixed (in particular by means of welding) to the core 20 of the temple 2 (in particular at the internal face of the latter). In particular, the core 20 is inserted within the covering 21 of the temple 2, preferably by means of removable attachment means 23, such as screw means. In particular, the covering 21 comprises a terminal portion which covers, on the side of the external face of the temple 2, the core part 20 fixed to the external front wall 7BE of the box-like body 7. The aforesaid access hole 40 in this case is made in the core 20 of the temple 2, while, preferably, it is not present in the covering 21 of the latter since such covering 21 can be easily separated from the core 20 (and hence from the box-like body 7) by means of the disengagement of the aforesaid removable attachment means 23.

It is also described a method a method for disassembling an elastic hinge for eyeglasses of the type described up to now, and regarding which the same reference numbers will be maintained for description simplicity.

Said method comprises a step of arranging at least two pins 19 spaced from each other.

Such arranging step can for example provide for a gripper provided with the two ends that terminate with the aforesaid pins 19 spaced from each other and preferably substantially aligned.

The method for disassembling the elastic hinge also comprises a step of inserting the at least two pins 19 within the through openings 18 of the box-like body 7 until they abut against the lock appendages 16.

Advantageously, in accordance with the embodiments illustrated in figures 15-28, the pin 19 placed on the side of the external lateral wall 7BE of the box-like body 7 is also inserted in the access hole 40 of the temple 2 so as to allow such pin 19 to reach the through opening 18 made on the external front wall 7BE itself.

Subsequently, the method provides for a compression step, in which the pins 19 are moved closer together, parallel to a transverse axis Z substantially orthogonal to the longitudinal direction Y of the elongated element 11, in which the lock appendages 16 are moved from a lock configuration, in which they engage the internal surface of the box-like body 7, to a release configuration, in which the lock appendages 16 are thrust to mutually approach up to disengaging the internal surface of the box-like body 7.

Preferably, the compression step provides for compressing the lock appendages 16 such that they arrive substantially adhered to the elongated element 11 of the carriage 9.

Advantageously, the method also provides for an extraction step, in which the carriage 9 is extracted from the seat 8 of the box-like body 7 through the opening 8' of the seat 8, moving it along the longitudinal direction Y.

Preferably, during the extraction step, the lock appendages 16 are maintained in the release configuration by means of the compression of the pins 19.

The hinge thus conceived therefore attains the pre-established objects and in particular it can be disassembled in a quick and simple manner for any type of maintenance or substitution.

## Claims

1. Elastic hinge (1) for eyeglasses, which comprises:
- at least one first articulation element (4) mechanically associable with a first component of an eyeglass frame, in particular a temple (2);
- and at least one second articulation element (5) mechanically associable with a second component of the eyeglass frame, in particular a front, and rotatably coupled to said first articulation element (4);
- at least one hinge pin (6), which rotatably connects said first articulation element (4) to said second articulation element (5) around a rotation axis (X);
said first articulation element (4) comprising:
- a box-like body (7), which is provided with an internal surface, which delimits a seat (8) provided with an opening (8') directed towards said second articulation element (5), and with an external surface;
- a carriage (9), which is slidably inserted within the seat (8) of said box-like body (7), and is provided with:
- a head (10) at least partially projecting from the opening (8') of the seat (8) of said box-like body (7);
- an elongated element (11), which is mainly extended along a longitudinal direction (Y) between a first end, at which said head (10) is fixed, and an opposite second end, which carries, fixed thereto, a terminal element (12);
- a spring (13), which acts on said terminal element (12);
- at least one retention element (15), which is locked in the seat (8) of said box-like body (7) and is positioned between said head (10) and said spring (13);
wherein said retention element (15) is provided with at least two lock appendages (16), elastically pliable, which are placed in positions that are substantially opposite with respect to said longitudinal direction (Y), are at least radially projecting from said elongated element (11), and are engaged with the internal surface of said box-like body (7);
said elastic hinge (1) being **characterized in that** said box-like body (7) is provided with at least two through openings (18), which are placed on opposite sides of said box-like body (7) with respect to said longitudinal direction (Y), are extended in a through manner between the external surface and the internal surface of said box-like body (7), and are communicating with said seat (8), and the corresponding said lock appendage (16) of said retention element (15) at least partially faces each of such through openings (18);
wherein the seat (8) of said box-like body (7) defines, along said longitudinal direction (Y), a guide with which said carriage (9) is slidably engaged in order to slide along said longitudinal direction (Y);
wherein the internal surface of said box-like body (7) is extended around said longitudinal direction (Y), extended in this manner also around the part of said carriage (9) inserted in said seat (8), defining the guide for said carriage (9);
wherein the internal surface of said box-like body (7) is provided with at least two undercut recesses (17), each of which engaging the corresponding said lock appendage (16) of said retention element (15);
wherein said through openings (18) are configured for being traversed by two corresponding pins (19) for moving said lock appendages (16) from a lock configuration, in which they engage the undercut recesses (17), to a release configuration, in which said lock appendages (16) are substantially adhered to the elongated element (11) in order to release said carriage (9) with respect to said box-like body (7);
wherein said box-like body (7) comprises two front walls (7BI, 7BE) placed on opposite sides with respect to said longitudinal direction (Y) and substantially parallel to said rotation axis (X), the corresponding said through opening (18) being made on each of such front walls (7BI, 7BE).

2. Elastic hinge (1) for eyeglasses according to claim 1, **characterized in that** said at least two lock appendages (16) comprise two elastic tabs which are extended tilted and terminate within said undercut recesses (17) of said box-like body (7).

3. Elastic hinge (1) for eyeglasses according to any one of the preceding claims, **characterized in that** each of said through openings (18) is in communication with the corresponding said undercut recess (17).

4. Elastic hinge (1) for eyeglasses according to claim 3, **characterized in that** said through openings (18) are made at said at least two undercut recesses (17) in order to place said lock appendages (16) in communication with an external environment.

5. Elastic hinge (1) for eyeglasses according to any one of the preceding claims, **characterized in that** said through openings (18) are substantially aligned along a transverse axis (Z) substantially orthogonal to said longitudinal direction (Y).

6. Elastic hinge (1) for eyeglasses according to any one of the preceding claims, **characterized in that** said elongated element (11) has rod-like shape and said terminal element (12) has widened shape; wherein said spring (13) is wound around said rod-like elongated element (11) and said retention element (15) is provided with a through hole (15') in which said rod-like elongated element (11) is slidably inserted.

7. Elastic hinge (1) for eyeglasses according to any one of the preceding claims 1 to 5, **characterized in that** said elongated element (11) comprises two elongated bodies (11') which are placed side-by-side and spaced from each other, and are connected to each other by said terminal element (12) at the second end of said elongated element (11);
wherein said spring (13) and said retention element (15) are placed between said two elongated bodies (11').

8. Elastic hinge (1) for eyeglasses according to claim 7, **characterized in that** the head (10) of said carriage (9) comprises two head shoulders (10'), each of which being fixed to the corresponding said elongated body (11') at the first end of said elongated element (11).

9. Articulation assembly for eyeglasses, which comprises:
- an elastic hinge (1) according to claim 1;
- a temple (2) which is longitudinally extended along said longitudinal direction (Y) and is integral with an external front wall (7BE) of said front walls (7BI, 7BE) of said box-like body (7);
wherein said temple (2) comprises at least one portion associated with said external front wall (7BE) and provided with a through access hole (40), which is aligned with the through opening (18) made on said external front wall (7BE) and is in communication with said through opening (18).

## Patentansprüche

1. Elastisches Scharnier (1) für Brillen, das Folgendes umfasst:
- mindestens ein erstes Gelenkelement (4), das mechanisch mit einer ersten Komponente eines Brillengestells verbunden werden kann, insbesondere einem Bügel (2);
- und mindestens ein zweites Gelenkelement (5), das mechanisch mit einer zweiten Komponente des Brillengestells verbunden werden kann, insbesondere einem Mittelteil, und drehbar mit dem genannten ersten Gelenkelement (4) gekuppelt ist;
- mindestens eine Scharnierschraube (6), die das genannte erste Gelenkelement (4) mit dem genannten zweiten Gelenkelement (5) um eine Drehachse (X) herum drehbar verbindet;
wobei das genannte erste Gelenkelement (4) Folgendes umfasst:
- einen Kastenkörper (7), der mit einer Innenfläche, die einen mit einer zu dem genannten zweiten Gelenkelement (5) gerichteten Öffnung (8') ausgestatteten Sitz (8) begrenzt, und mit einer Außenfläche ausgestattet ist;
- einen Schlitten (9), der verschiebbar in das Innere des Sitzes (8) des genannten Kastenkörpers (7) eingesetzt und mit Folgendem ausgestattet ist:
- einem Kopf (10), der mindestens teilweise von der Öffnung (8') des Sitzes (8) des genannten Kastenkörpers (7) vorsteht;
- einem länglichen Element (11), das vorrangig entlang einer Längsrichtung (Y) zwischen einem ersten Ende, an dem der genannte Kopf (10) befestigt ist, und einem entgegengesetzten zweiten Ende, an dem ein Abschlusselement (12) befestigt ist, verläuft;
- einer Feder (13), die auf das genannte Abschlusselement (12) wirkt;
- mindestens einem Rückhalteelement (15), das in dem Sitz (8) des genannten Kastenkörpers (7) blockiert ist und zwischen dem genannten Kopf (10) und der genannten Feder (13) positioniert ist;
wobei das genannte Rückhalteelement (15) mit mindestens zwei, elastisch nachgiebigen, Blockieransätzen (16) ausgestattet ist, die in zueinander im Wesentlichen entgegengesetzten Positionen im Verhältnis zu der genannten Längsrichtung (Y) angeordnet sind, mindestens radial von dem genannten länglichen Element (11) vorstehen und sich an der Innenfläche des genannten Kastenkörpers (7) im Eingriff befinden;
wobei das genannte elastische Scharnier (1) **dadurch gekennzeichnet ist, dass** der genannte Kastenkörper (7) mit mindestens zwei durchgehenden Öffnungen (18) ausgestattet ist, die an entgegengesetzten Seiten des genannten Kastenkörpers (7) im Verhältnis zu der genannten Längsrichtung (Y) angeordnet sind, auf durchgehende Weise zwischen der Außenfläche und der Innenfläche des genannten Kastenkörpers (7) verlaufen und mit dem genannten Sitz (8) verbunden sind, wobei jeder dieser durchgehenden Öffnungen (18) der entsprechende genannte Blockieransatz (16) des genannten Rückhalteelements (15) mindestens teilweise gegenüberliegt; wobei der Sitz (8) des genannten Kastenkörpers (7) entlang der genannten Längsrichtung (Y) eine Führung definiert, in der sich der genannte Schlitten (9) verschiebbar im Eingriff befindet, um entlang der genannten Längsrichtung (Y) zu gleiten;
wobei die Innenfläche des genannten Kastenkörpers (7) um die genannte Längsrichtung (Y) herum verläuft und so auch um den Teil des in den genannten Sitz (8) eingesetzten genannten Schlittens (9) verläuft und die Führung für den genannten Schlitten (9) definiert,
wobei die Innenfläche des genannten Kastenkörpers (7) mit mindestens zwei hinterschnittenen Hohlräumen (17) ausgestattet ist, von denen jeder sich mit dem entsprechenden genannten Blockieransatz (16) des genannten Rückhalteelements (15) im Eingriff befindet,
wobei die genannten durchgehenden Öffnungen (18) darauf ausgelegt sind, von zwei entsprechenden Bolzen (19) überquert zu werden, um die genannten Blockieransätze (16) aus einer Blockierkonfiguration, in der sie sich mit den hinterschnittenen Hohlräumen (17) in Eingriff befinden, in eine Freigabekonfiguration, in der die genannten Blockieransätze (16) im Wesentlichen an dem länglichen Element (11) anliegen, um den genannten Schlitten (9) im Verhältnis zu dem genannten Kastenkörper (7) freizugeben, zu bewegen;
wobei der genannte Kastenkörper (7) zwei vordere Wände (7BI, 7BE) umfasst, die im Verhältnis zu der genannten Längsrichtung (Y) auf entgegengesetzten Seiten angeordnet und im Wesentlichen parallel zu der genannten Drehachse (X) sind, wobei auf jeder dieser vorderen Wände (7BI, 7BE) die entsprechende genannte durchgehende Öffnung (18) angebracht ist.

2. Elastisches Scharnier (1) für Brillen nach Anspruch 1, **dadurch gekennzeichnet, dass** die genannten mindestens zwei Blockieransätze (16) zwei elastische Zungen umfassen, die geneigt verlaufen und im Inneren der hinterschnittenen Hohlräume (17) des genannten Kastenkörpers (7) enden.

3. Elastisches Scharnier (1) für Brillen nach einem beliebigen der vorangegangenen Ansprüche, **dadurch gekennzeichnet, dass** jede der genannten durchgehenden Öffnungen (18) mit dem entsprechenden genannten hinterschnittenen Hohlraum (17) verbunden ist.

4. Elastisches Scharnier (1) für Brillen nach Anspruch 3, **dadurch gekennzeichnet, dass** die genannten durchgehenden Öffnungen (18) an den genannten mindestens zwei hinterschnittenen Hohlräumen (17) angebracht sind, um die genannten Blockieransätze (16) mit einer Außenumgebung in Verbindung zu bringen.

5. Elastisches Scharnier (1) für Brillen nach einem beliebigen der vorangegangenen Ansprüche, **dadurch gekennzeichnet, dass** die genannten durchgehenden Öffnungen (18) im Wesentlichen entlang einer Querachse (Z) im Wesentlichen orthogonal zu der genannten Längsrichtung (Y) ausgerichtet sind.

6. Elastisches Scharnier (1) für Brillen nach einem beliebigen der vorangegangenen Ansprüche, **dadurch gekennzeichnet, dass** das genannte längliche Element (11) stangenförmig ist und das genannte Abschlusselement (12) eine verbreiterte Form aufweist; wobei die genannte Feder (13) um das genannte stangenförmige längliche Element (11) gewickelt ist und das genannte Rückhalteelement (15) mit einer durchgehenden Bohrung (15') versehen ist, in die das genannte stangenförmige längliche Element (11) verschiebbar eingesetzt ist.

7. Elastisches Scharnier (1) für Brillen nach einem beliebigen der vorangegangenen Ansprüche 1 bis 5, **dadurch gekennzeichnet, dass** das genannte längliche Element (11) zwei längliche Körper (11') umfasst, die nebeneinander und im Abstand zueinander angeordnet und miteinander anhand des genannten Abschlusselements (12) an dem zweiten Ende des genannten länglich Elements (11) verbunden sind;
wobei die genannte Feder (13) und das genannte Rückhalteelement (15) zwischen den genannten beiden länglichen Körpern (11') angeordnet sind.

8. Elastisches Scharnier (1) für Brillen nach Anspruch 7, **dadurch gekennzeichnet, dass** der Kopf (10) des genannten Schlittens (9) zwei Kopfseitenteile (10') umfasst, von denen jeder an dem genannten länglichen Körper (11') an dem ersten Ende des genannten länglichen Elements (11) befestigt ist.

9. Gelenkbaugruppe für Brillen, die Folgendes umfasst:
- ein elastisches Scharnier (1) nach Anspruch 1;
- einen Bügel (2), der längs entlang der genannten Längsrichtung (Y) verläuft und mit einer äußeren vorderen Wand (7BE) der genannten vorderen Wände (7BI, 7BE) des genannten Kastenkörpers (7) fest verbunden ist;
wobei der genannte Bügel (2) mindestens einen mit der genannten äußeren vorderen Wand (7BE) verbundenen Abschnitt umfasst, der mit einer durchgehenden Zugangsöffnung (40) ausgestattet ist, die mit der auf der genannten äußeren vorderen Wand (7BE) angebrachten durchgehenden Öffnung (18) ausgerichtet und mit der genannten durchgehenden Öffnung (18) verbunden ist.

## Revendications

1. Charnière élastique (1) pour lunettes, comprenant :
- au moins un premier élément d'articulation (4) pouvant être associé mécaniquement à un premier composant d'une monture de lunettes, notamment une tige (2) ;
- et au moins un deuxième élément d'articulation (5) pouvant être associé mécaniquement à un deuxième composant de la monture des lunettes, notamment une face, et couplé de manière rotative audit premier élément d'articulation (4) ;
- au moins une broche de charnière (6), qui relie de manière rotative ledit premier élément d'articulation (4) audit deuxième élément d'articulation (5) autour d'un axe de rotation (X) ;
ledit premier élément d'articulation (4) comprenant :
- un corps en forme de boîte (7), qui est pourvu d'une surface intérieure, qui délimite un siège (8) muni d'une ouverture (8') orientée vers ledit deuxième élément d'articulation (5), et d'une surface extérieure ;
- une coulisse (9), qui est insérée de manière coulissante à l'intérieur du siège (8) dudit corps en forme de boîte (7), et est munie de :
- une tête (10) faisant au moins partiellement saillie à partir de l'ouverture (8') du siège (8) dudit corps en forme de boîte (7) ;
- un élément allongé (11), qui se développe principalement le long d'une direction longitudinale (Y) entre un premier embout, auquel ladite tête (10) est fixée, et un deuxième embout opposé, qui soutient un élément d'extrémité (12) ;
- un ressort (13), qui agit sur ledit élément d'extrémité (12) ;
- au moins un élément de retenue (15), qui est bloqué dans le siège (8) dudit corps en forme de boîte (7) et est positionné entre ladite tête (10) et ledit ressort (13) ;
dans laquelle ledit élément de retenue (15) est pourvu d'au moins deux appendices de blocage (16), malléables élastiquement, qui sont disposés dans des positions sensiblement opposées l'une à l'autre par rapport à ladite direction longitudinale (Y), ils font saillie de façon au moins radiale à partir dudit élément allongé (11), et sont en prise avec la surface intérieure dudit corps en forme de boîte (7) ;
ladite charnière élastique (1) étant **caractérisée en ce que** ledit corps en forme de boîte (7) est muni d'au moins deux ouvertures traversantes (18), qui sont disposées des deux côtés dudit corps en forme de boîte (7) par rapport à ladite direction longitudinale (Y), s'étendent de manière à traverser la surface extérieure et la surface intérieure dudit corps en forme de boîte (7), et communiquent avec ledit siège (8), ledit appendice de blocage (16) correspondant dudit élément de retenue (15) étant au moins partiellement en regard de chacune des ouvertures traversantes (18) ;
dans laquelle ledit siège (8) dudit corps en forme de boîte (7) définit, le long de ladite direction longitudinale (Y), un guide avec lequel ladite coulisse (9) est mise en prise de manière coulissante pour glisser le long de ladite direction longitudinale (Y) ;
dans laquelle la surface intérieure dudit corps en forme de boîte (7) s'étend autour de ladite direction longitudinale (Y), s'étendant ainsi même autour de la partie de ladite coulisse (9) insérée dans ledit siège (8), définissant le guide pour ladite coulisse (9) ;
dans laquelle la surface intérieure dudit corps en forme de boîte (7) est munie d'au moins deux évidements en contre-dépouille (17), chacun desquels est mis en prise avec ledit appendice de blocage (16) correspondant dudit élément de retenue (15) ;
dans laquelle lesdites ouvertures traversantes (18) sont configurées pour être traversées par deux broches (19) correspondantes pour déplacer lesdits appendices de blocage (16) entre une configuration de blocage, dans laquelle ils se mettent en prise avec les évidements en contre-dépouille (17), et une configuration de dégagement, dans laquelle lesdits appendices de blocage (16) adhèrent sensiblement à l'élément allongé (11) pour dégager ladite coulisse (9) par rapport au corps en forme de boîte (7) ;
dans laquelle ledit corps en forme de boîte (7) comprend deux parois avant (7BI, 7BE) disposées des deux côtés opposés de ladite direction longitudinale (Y) et sensiblement de façon parallèle audit axe de rotation (X), ladite ouverture traversante (18) correspondante étant pratiquée dans chacune des parois avant (7BI, 7BE).

2. Charnière élastique (1) pour lunettes selon la revendication 1, **caractérisée en ce que** lesdits au moins deux appendices de blocage (16) comprennent deux languettes élastiques qui se développent de façon inclinée et aboutissent à l'intérieur desdits évidements en contre-dépouille (17) dudit corps en forme de boîte (7).

3. Charnière élastique (1) pour lunettes selon l'une quelconque des revendications précédentes, **caractérisée en ce que** chacune desdites ouvertures traversantes (18) est en communication avec ledit évidement en contre-dépouille (17) correspondant.

4. Charnière élastique (1) pour lunettes selon la revendication 3, **caractérisée en ce que** lesdites ouvertures traversantes (18) sont pratiquées au niveau desdits au moins deux évidements en contre-dépouille (17) pour mettre en communication lesdits appendices de blocage (16) avec l'environnement extérieur.

5. Charnière élastique (1) pour lunettes selon l'une quelconque des revendications précédentes, **caractérisée en ce que** lesdites ouvertures traversantes (18) sont sensiblement alignées le long d'un axe transversal (Z) sensiblement orthogonal à ladite direction longitudinale (Y).

6. Charnière élastique (1) pour lunettes selon l'une quelconque des revendications précédentes, **caractérisée en ce que** ledit élément allongé (11) est en forme de tige et ledit élément d'extrémité (12) a une forme élargie ; dans laquelle ledit ressort (13) est enroulé autour dudit élément allongé (11) en forme de tige et ledit élément de retenue (15) est pourvu d'un orifice traversant (15') dans lequel ledit élément allongé (11) en forme de tige est inséré de manière coulissante.

7. Charnière élastique (1) pour lunettes selon l'une quelconque des revendications précédentes 1 à 5, **caractérisée en ce que** ledit élément allongé (11) comprend deux corps allongés (11') qui sont disposés côte à côte et espacés l'un de l'autre, et sont reliés l'un à l'autre par ledit élément d'extrémité (12) au niveau du deuxième embout dudit élément allongé (11) ;
dans laquelle ledit ressort (13) et ledit élément de retenue (15) sont disposés entre lesdits deux corps allongés (11').

8. Charnière élastique (1) pour lunettes selon la revendication 7, **caractérisée en ce que** la tête (10) de ladite coulisse (9) comprend deux épaulements de tête (10'), chacun desquels est fixé audit corps allongé (11') correspondant au niveau du premier embout dudit élément allongé (11).

9. Ensemble d'articulation pour lunettes, comprenant :
- une charnière élastique (1) selon la revendication 1 ;
- une tige (2) qui se développe longitudinalement le long de ladite direction longitudinale (Y) et est solidaire d'une paroi avant extérieure (7BE) desdites parois avant (7BI, 7BE) dudit corps en forme de boîte (7) ;
dans lequel ladite tige (2) comprend au moins une portion associée à ladite paroi avant extérieure (7BE) et pourvue d'un orifice traversant d'accès (40), qui est aligné avec l'ouverture traversante (18) pratiquée dans ladite paroi avant extérieure (7BE) et est en communication avec ladite ouverture traversante (18).
